# EUROPEAN PATENT SPECIFICATION

(11) **EP 1 171 329 B1**
(45) Date of publication and mention of the grant of the patent: **19.05.2004**
(21) Application number: 00908610.9
(22) Date of filing: 11.02.2000
(51) Int. Cl.: B60R 21/32, B60R 21/20

(54) **AIR BAG COVER WITH VEHICLE OPERATOR POSITION SENSOR AND HORN SWITCH**
AIRBAG-ABDECKUNG MIT FAHRERPOSITIONSSENSOR UND HUPENSCHALTER
ELEMENT DE COUVERTURE D'AIR BAG POURVU D'UN DISPOSITIF DE DETECTION DE LA POSITION DU CONDUCTEUR ET D'UN COMMUTATEUR D'AVERTISSEUR

(30) Priority: 21.04.1999 US 295843
(43) Date of publication of application: 16.01.2002
(73) Proprietor: KEY SAFETY SYSTEMS, INC., Sterling Heights, Michigan 48314 (US)
(72) Inventor: LOTITO, James, C., Warren, MI 48089 (US); MARKER, Ronald, A., Sterling Heights, MI 48314 (US); OWEN, Matthew, W., Harperwoods, MI 48225 (US); VIVACQUA, Raymond, J., Northville, MI 48167 (US)
(74) Representative: Gislon, Gabriele
(86) International application number: PCT/US2000/003635
(87) International publication number: WO 2000/064710

(56) References cited:
- GB-A- 2 319 997
- US-A- 5 399 819
- US-A- 5 722 686
- US-A- 5 961 144

## Description

The present invention relates to a cover for a steering wheel airbag module.

Safety restraint systems are used in motor vehicles for protecting the vehicle operators during crashes. In addition to seatbelts many safety restraint systems now include a driver-side airbag mounted within the steering wheel. To initially accommodate the airbag module within the central portion of the steering wheel, the vehicular horn activation switch or switches were moved toward the outer periphery and typically mounted to the support spokes of the steering wheel. Additionally, several types of steering wheel airbag covers have been developed which include a horn switch that is more easily located and depressed before the impact in a potential crash situation.

In addition to a centrally located horn switch, it is also desirable to provide a vehicle operator proximity sensor within the driver seating area for detecting whether the driver is correctly positioned within the passenger compartment.

Closest prior art document US 5 722 686 A shows and describes a cover for a steering wheel mounted airbag module having two capacitor plates of a variable capacitor on opposite sides of a tear seam for sensing the position of an occupant to be protected by the airbag. The capacitor plates could be horn switch contacts located in the vehicle steering wheel so that the horn contacts serve two purposes. When the horn switch contacts are depressed, the horn is energized. When the horn switch contacts are not depressed, they function as the capacitive sensor. In one embodiment, the horn contacts form membrane switches.

Accordingly, it is desirable to provide an airbag cover for use with a steering wheel mounted airbag module that incorporates a horn switch and a vehicle operator proximity sensor which communicates with the vehicle's crash management system.

The present invention is directed to a cover for a steering wheel mounted airbag module according to appended claim 1.

### Brief Description of the Drawings

The various advantages of the present invention will become apparent to one skilled in the art by reading the following specification and appended claims, and by referencing the following drawings in which:
FIG. 1 shows a steering wheel incorporating a vehicle operator proximity sensor and horn switch into the airbag module cover in accordance with a preferred embodiment of the present invention;
FIG. 2 is a partial cross-sectional view of the airbag module cover taken along line 2 - 2 of FIG. 1;
FIG. 3 is a schematic diagram showing a side view of the vehicle operator proximity sensor and horn switch also in accordance with the preferred embodiment of the present invention;
FIG. 4 is a top schematic view showing the physical layout of the various conductors associated with the vehicle operator proximity sensor also in accordance with a preferred embodiment of the present invention;
FIG. 5 is a partial sectional view showing the preferred construction of the airbag module cover in accordance with the present invention; and
FIG. 6 is a partial sectional view showing the airbag module cover and horn switch in an actuated state.

### Detailed Description of the Invention

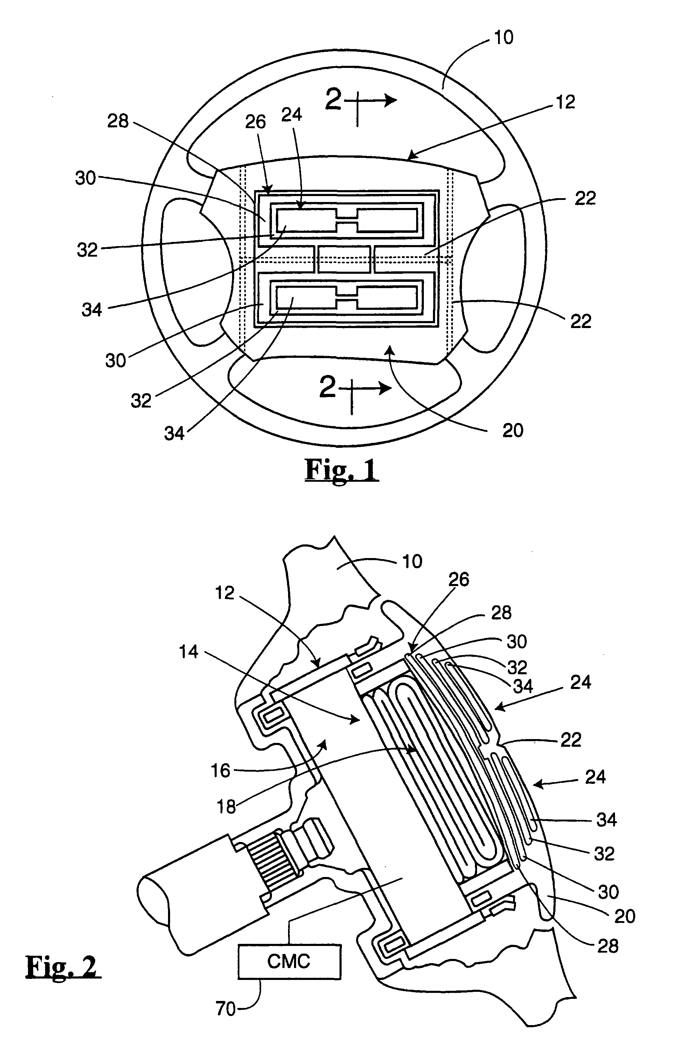

In general, the present invention is directed to a vehicle operator proximity sensor and a horn switch which can be integrated into the cover of an airbag module. With reference to FIG. 1, a steering wheel 10 includes an airbag module housing 12 for accommodating a steering wheel airbag module 14.

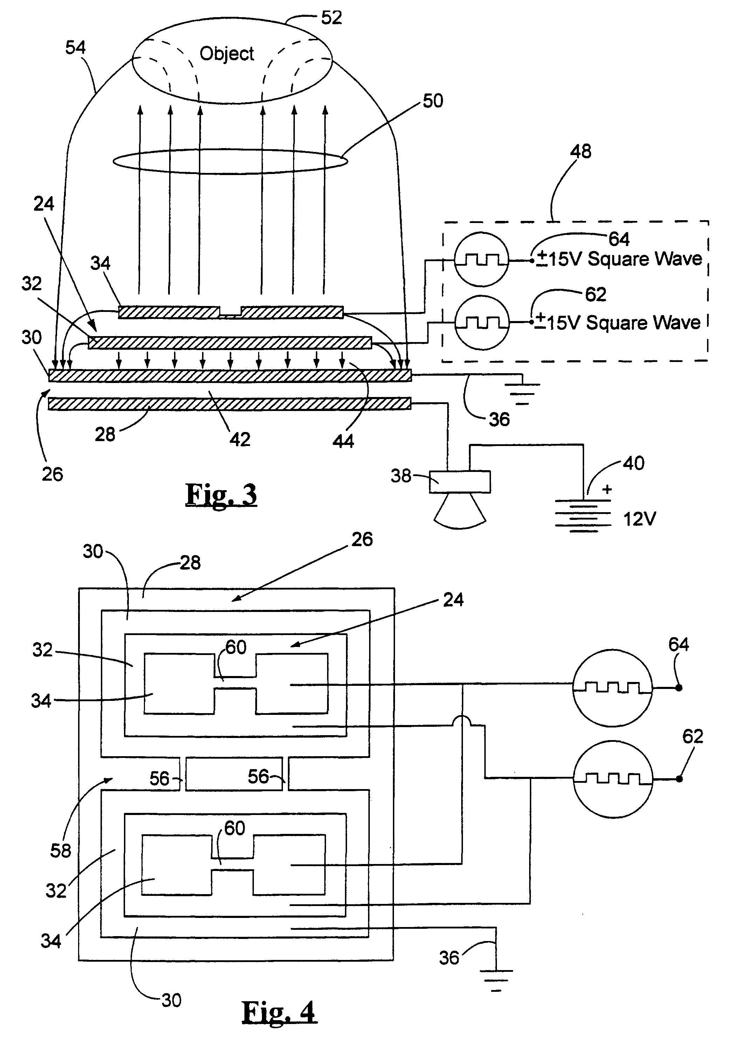

As seen in FIG. 2, the airbag module 14 includes a pyrotechnic inflator 16 for deploying an airbag 18 during a crash. Preferably, the inflator 16 that is actuated by the vehicle's crash management controller is capable of deploying the airbag with a range of deployment forces. The inflator 16 may be a hybrid-type inflator having two separate stored energy devices, or a single-level inflator having a valve or other type of electronically actuated regulating device for controlling the pressure and mass flow of the inflation gases discharged from the inflator 16.

With reference to FIGS. 1 and 2, an airbag module cover 20 includes a capacitive proximity sensor 24 and a horn switch 26. The airbag module cover also includes a tear seam 22 that is preferably molded therein and forms an "H" or other pattern as indicated by the dashed lines. The tear seam can also be configured as an "I" or "U" shaped pattern. The frangible area defined by the tear seam 22 allows the perforation of airbag module cover along tear seam during the deployment of airbag.

As shown, the horn switch 26 comprises a horn switch conductor 28 and a ground plane conductor 30. An air gap 42 is provided between the conductors 28, 30 and defines a uniform gap therebetween. Preferably, the conductors 28, 30 are formed from a thin metal foil, approximately 0.25 - 0.50 mm in thickness that defines a membrane switch within the airbag module cover 20 for activating the vehicle's horn 38.

A capacitive proximity sensor 24 is generally defined by the opposing surface of a ground conductor 30. A shield conductor 32 is disposed on top of and generally parallel to the ground conductor. A sensor conductor 34 is disposed generally parallel to the shield conductor 32. It is preferred that the conductors 32, 34 are formed from a thin metal foil, approximately 0.25 mm in thickness. Accordingly, the combination of the ground conductor 30, shield conductor 32 and sensor conductor 34 forms a three-plate capacitor which can be connected to a proximity sensor circuit 48 for detecting the presence and/or position of an object 52 in front of the airbag module 14 and steering wheel 10.

FIG. 1 shows the approximate location of the capacitive proximity sensor 24 within the airbag module cover 20. However, one skilled in the art will appreciate that the proximity sensor and horn switch can take on a variety of sizes to accommodate different manufacturing specifications for the airbag module cover. FIG. 2 shows the curved profile of the proximity the sensor 24 and the horn switch 26. The thin conductive material used in forming the conductors 28, 30, 32 and 34 allows the integration of these components within a conventional plastic or flexible airbag module cover 20 having a thickness of approximately 2 - 4 mm. Accordingly, it will be appreciated that the construction technique for the proximity sensor 24 and the horn switch 26 allow these components to be integrated within a wide range of curved or flat airbag module covers without significantly increasing the overall thickness of the cover.

The proximity sensor 24 used in the preferred embodiment of the present invention is a capacitive proximity sensing element, sometimes referred to as a capaciflector. With reference to FIG. 3, a schematic diagram and circuit model for the proximity sensor 24 and horn switch 26 is shown. As shown, a ground plane conductor 30 is connected to the vehicle ground 36. The horn switch conductor 28 is connected to one terminal of the vehicle horn 38. A second terminal of the vehicle horn 38 is connected to the vehicle's 12V power supply 40. An air gap 42 provides the necessary separation between the horn switch conductor 28 and the ground plane conductor 30. Accordingly, electrical contact between the horn switch conductor 28 and the ground plane conductor 30 completes the electrical circuit for activating the horn 38.

As previously discussed, a proximity sensor or capaciflector 24 includes three conductive members with dielectric layers disposed therebetween. More specifically, a first dielectric layer 44 is disposed between a ground plane conductor 30 and a shield conductor 32. A second dielectric layer 46 is disposed between a shield conductor 32 and a sensor conductor 34. Preferably, the first and second dielectric layers 44, 46 have a thickness of approximately .38mm. As disclosed, the shield conductor 32 and sensor conductor 34 are connected to separate nodes of the proximity sensor driver circuit 48. Each node of the driver circuit 48 then receives a plus/minus 15 V square wave driver signal. Accordingly, the shield conductor 32 is driven in phase with the sensor conductor 34. Additionally, the sensor conductor 34 is maintained at a voltage potential that is at least equal to or higher than the potential of the shield conductor 32.

In operation, the sensor 34 reflects electric field lines 50 away from the ground plane conductor 30 toward an object 52 intruding in the field. The circuit model for the capaciflector 24 assumes that the intruding object 52 is grounded and therefore at the same potential as the ground plane conductor 30. When the shield 32 and the sensor 34 are energized an extended electric field, generally indicated by an electric field line 50, is produced. This electric field 54 can extend several feet beyond the capacitive proximity sensor 24 depending upon the voltages applied to the shield 32 and sensor 34. When the object 52 is introduced into the electric field 50 a negative electric charge is induced on the surface of the object. The surface of the object 52 effectively becomes a capacitive electrode of the proximity sensor 24 in conjunction with the sensor conductor 34. As the object moves toward or away from the sensor the capacitive value therebetween changes. This change in capacitance value, or the electronic effect produced by this change in capacitance, can be measured by a proximity sensor circuit 48 for detecting the relative position or change in position of the object 52.

As shown, a shield conductor 32 is wider than the sensor conductor 34. This generates the electric field distribution shown in FIG. 3 where it can be seen that the shield conductor 32 shields the sensor conductor 34 from the ground plane conductor 30. Accordingly, the shield conductor operates by concentrating the electric field between the sensor and the intruding object with little, if any, of the electric field returning directly to ground plane conductor 30 (due to the effects of parasitic capacitance). The sensor conductor 34 is thus shielded from a nearby ground, (i.e., the ground plane conductor 30), such that the capacitance between the sensor and the ground plane is substantially reduced if not eliminated. Therefore, the shield conductor 32 forces the field lines 50 from the sensor conductor 34 toward the intruding object 52 as much as possible as shown in FIG. 3. This technique significantly increases the operating range of capacitive the proximity sensor 24. Additionally, it should be understood that the horn switch conductor 28 is not part of, and has no effect upon the operation of the capacitive proximity sensor 24. The horn switch can be used to directly activate the horn or connected to a high voltage relay that activates the horn.

With reference to FIG. 4, the relative physical proportions of the conductive layers forming the proximity sensor 24 and the horn switch 26 are shown. While not specifically shown in FIG. 4, it should be understood that in the preferred embodiment, first and second dielectric layers 44, 46 are disposed between the conductors of the capacitive proximity sensor 24. As disclosed, the horn switch conductor 28 is positioned at the bottom and/or rear of the assembly, and also occupies the largest area of the four conductive layers. The ground plane conductor 30 is positioned above or in front of the horn switch conductor 28.

In a preferred embodiment, the ground plane conductor 30 is actually two separate conductors disposed in and along the same plane. These separate conductors are electrically connected by a pair of bridge conductors 56 which cross a seam area 58. Accordingly, only a minimal amount of conductive material associated with the ground plane layer 30 is contained within the seam area. Bridge conductors 56 also allow both sections of the ground plane layer 30 to be maintained at the same ground potential by using one ground connector 36. A pair of shield conductors 32, which occupy a smaller area than the ground plane conductors 30, are disposed above or in front of the ground conductors 30 and are separated therefrom by the first dielectric layer 44. Preferably, the first dielectric layer 44 comprises the same material from which airbag module cover 20 is formed or molded. The shield conductors 32, while disposed in the same plane, must be separately connected to a node 62 of driver circuit 48. Finally, a pair of sensor conductors 34 that occupy yet a smaller area are positioned above the shield conductors 32 and separated therefrom by the second dielectric layer 46. Preferably the second dielectric layer also comprises the same material as the airbag module cover 20. A pair of individual connectors is provided to the separate the sensor conductors 34 for connection to a node 64 of the driver circuit 48.

As shown, each sensor conductor 34 comprises two individual sensor sections that are joined via a bridge connector 60. This design provides several benefits to the capacitive proximity sensor 24. The narrower width of the bridge connector 60 increases the frontal area or exposure of the shield conductor 32, which in turn serves to increase the concentration of field lines 50 toward the object 52. The bridge connector 60 provides additional flexibility to the proximity sensor 24 which allows the airbag module cover 20 to be deflected more easily for moving the ground plane conductors 30 into electrical contact with the horn switch conductor 28.

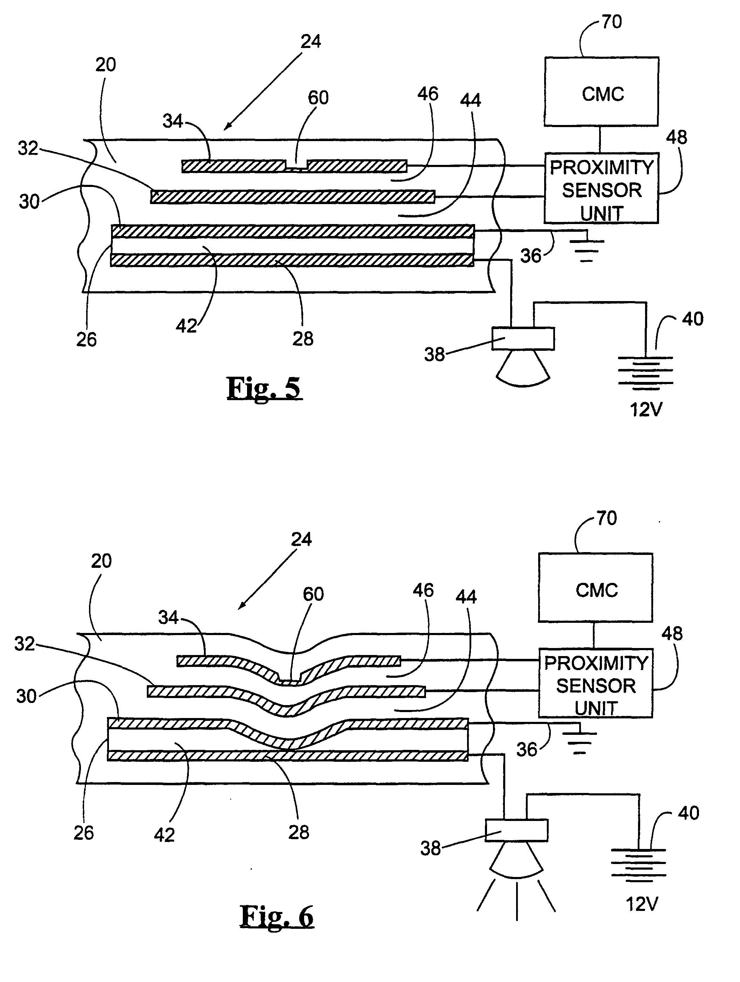

FIGS. 5 and 6 show the operation of the capacitive proximity sensor 24 and horn switch 26 of the present invention shown in more detail. FIG. 5 shows an airbag module cover 20 and horn switch 26 in the non-actuated state. During vehicle operation the proximity sensor 24 is active and is constantly providing signals indicating vehicle operator position information to the vehicle's crash management controller 70 by way of a proximity sensor circuit 48. The change in capacitance value as the object 52 moves with respect to the proximity sensor 24 produces a detectable change in the driver signals produced by proximity sensor circuit 48, and may be detected using a variety of techniques known within the art. When the proximity sensor circuit 48 detects that the object 52 is too close to the deployment zone being monitored by the proximity sensor 24, a signal indicating this condition is sent to the crash management controller 70. During normal operating conditions the vehicle operator can be alerted that he is too close to the deployment zone of the airbag 18. Preferably, this alert is provided by the crash management controller 70 as a visual warning light or an audible warning signal which continues until the vehicle operator is a sufficient distance from the deployment zone. However, if the vehicle operator is too close to the deployment zone during a crash and the proximity sensor circuit 48 detects this condition, the crash management controller may deploy the airbag with reduced force by controlling the output generated by the airbag inflator. This may be achieved in several ways as described above.

As shown in FIG. 6, when the airbag module cover 20 is depressed or deflected by the vehicle operator the ground plane conductor 30 makes electrical contact with the horn switch conductor 28 for activating the vehicle's horn 38. It should be understood that the airbag module cover 20 provides sufficient flexibility for the horn 38 to be easily activated, while also maintaining an elastic memory which allows the electrical contact of the horn switch 26 to be "opened" when pressure on the airbag module cover 20 is released for deactivating the horn 38. When the horn switch 26 is activated the proximity sensor circuit 48 can detect the presence of the vehicle operator's hand within the airbag deployment zone and signal the crash management controller 70 of the this condition. If a crash were to occur while the horn switch 26 is being activated, the crash management controller 70 can deploy the airbag 18 with reduced force as previously described.

Accordingly, it will be appreciated by one skilled in the art that the proximity sensor and horn switch associated with the present invention provide a low profile sensor assembly which can be integrated within conventional flexible plastic covers such as the airbag module cover 20. The feature providing a common ground plane conductor 30 which operates in conjunction with both the proximity sensor 24 and horn switch 26 eliminates an additional layer of conductive material from the assembly. The present invention allows more efficient manufacturing of an airbag module cover at a lower cost. This technique also allows the conventional horn switch buttons to be removed from the steering wheel spokes and the horn activation switch placed into a position which is more easily and instinctively located by the vehicle operator. Finally, the present invention allows a vehicle operator proximity sensor to be incorporated within the steering wheel for detecting objects which are too close to the airbag deployment zone. If such a condition is detected, the vehicle operator may be notified either visually or with an audible warning signal.

## Claims

1. A cover (20) for a steering wheel mounted airbag module (14) comprising:
a horn switch (26) formed by a first conductive layer (30) defining a ground plane and a second conductive layer (28) for contacting one side of the first conductive layer (30); and
a proximity sensor (24) formed by a third conductive layer (32) and a fourth conductive layer (34), wherein the third and fourth conductive layers are electrically associated with the first conductive layer, the proximity sensor generating an electric field (50) in response to a signal received from a driver circuit (48).

2. The cover (20) for a steering wheel mounted airbag module (14) of claim 1 wherein the third conductive layer (32) operates as a shield for isolating the fourth conductive layer (34) from an electrical potential associated with the first conductive layer (30).

3. The cover (20) for a steering wheel mounted airbag module (14) of claim 1 wherein the fourth conductive layer (34) generates the electric field (50) and directs the electric field (50) toward an object (52) positioned in front of the proximity sensor (24).

4. The cover 20) for a steering wheel mounted airbag module (14) of any of the preceding claims wherein the first conductive layer (30) and the second conductive layer (28) are surrounded by a flexible material (20) forming the cover (20) for defining a membrane switch (26).

5. The cover (20) for a steering wheel mounted airbag module (14) of any of the preceding claims further including a frangible seam (22) that may be separated during the deployment of an airbag (18).

6. The cover (20) for a steering wheel mounted airbag module (14) of any of the preceding claims wherein a dielectric layer (44) is disposed between the first conductive layer (30) and the third conductive layer (32).

7. The cover (20) for a steering wheel mounted airbag module (14) of any of the preceding claims wherein a dielectric layer (46) is disposed between the third conductive layer (32) and the fourth conductive layer (34).

8. The cover (20) for a steering wheel mounted airbag module (14) of any of the preceding claims wherein the first conductive layer (30) includes a first section and a second section interconnected by a conductive bridge section (56).

9. The cover (20) for a steering wheel mounted airbag module (14) of any of the preceding claims wherein electrical contact between the first and second conductive layers (30, 28) completes an electrical circuit for activating a vehicular horn (38).

## Patentansprüche

1. Abdeckung (20) für ein lenkradmontiertes Airbagmodul (14), die folgendes umfaßt:
einen Hupenschalter (26), gebildet durch eine erste leitfähige Schicht (30), die eine Masseplatte definiert, und eine zweite leitfähige Schicht (28), um einen Kontakt mit einer Seite der ersten leitfähigen Schicht (30) herzustellen, und
einen Näherungssensor (24), gebildet durch eine dritte leitfähige Schicht (32) und eine vierte leitfähige Schicht (34), bei der die dritte und die vierte leitfähige Schicht elektrisch mit der ersten leitfähigen Schicht verbunden werden, wobei der Näherungssensor als Reaktion auf ein von einer Treiberschaltung (48) empfangenes Signal ein elektrisches Feld (50) erzeugt.

2. Abdeckung (20) für ein lenkradmontiertes Airbagmodul (14) nach Anspruch 1, bei der die dritte leitfähige Schicht (32) als Abschirmung zum Isolieren der vierten leitfähigen Schicht (34) von einem mit der ersten leitfähigen Schicht (30) verbundenen elektrischen Potential arbeitet.

3. Abdeckung (20) für ein lenkradmontiertes Airbagmodul (14) nach Anspruch 1, bei der die vierte leitfähige Schicht (34) das elektrische Feld (50) erzeugt und das elektrische Feld (50) zu einem vor dem Näherungssensor (24) angeordneten Gegenstand (52) hin richtet.

4. Abdeckung (20) für ein lenkradmontiertes Airbagmodul (14) nach einem der vorhergehenden Ansprüche, bei der die erste leitfähige Schicht (30) und die zweite leitfähige Schicht (28) von einem flexiblen Material (20), das die Abdeckung (20) bildet, umschlossen werden, um einen Folienschalter (26) zu definieren.

5. Abdeckung (20) für ein lenkradmontiertes Airbagmodul (14) nach einem der vorhergehenden Ansprüche, die außerdem eine zerreißbare Naht (22) einschließt, die während des Entfaltens eines Airbags (18) aufgetrennt werden kann.

6. Abdeckung (20) für ein lenkradmontiertes Airbagmodul (14) nach einem der vorhergehenden Ansprüche, bei der eine dielektrische Schicht (44) zwischen der ersten leitfähigen Schicht (30) und der dritten leitfähigen Schicht (32) angeordnet wird.

7. Abdeckung (20) für ein lenkradmontiertes Airbagmodul (14) nach einem der vorhergehenden Ansprüche, bei der eine dielektrische Schicht (46) zwischen der dritten leitfähigen Schicht (32) und der vierten leitfähigen Schicht (34) angeordnet wird.

8. Abdeckung (20) für ein lenkradmontiertes Airbagmodul (14) nach einem der vorhergehenden Ansprüche, bei der die erste leitfähige Schicht (30) einen ersten Abschnitt und einen zweiten Abschnitt einschließt, die durch einen leitfähigen Brückenabschnitt (56) miteinander verbunden werden.

9. Abdeckung (20) für ein lenkradmontiertes Airbagmodul (14) nach einem der vorhergehenden Ansprüche, bei der ein elektrischer Kontakt zwischen der ersten und der zweiten leitfähigen Schicht (30, 28) einen elektrischen Stromkreis schließt, um eine Fahrzeughupe (38) zu betätigen.

## Revendications

1. Couvercle (20) pour un module de coussin d'air monté sur le volant (14), comprenant:
un interrupteur de klaxon (26) constitué par une première couche conductrice (30) définissant un plan de masse et une deuxième couche conductrice (28) destinée à contacter un côté de la première couche conductrice (30); et
un capteur de proximité (24) constitué par une troisième couche conductrice (32) et une quatrième couche conductrice (34), les troisième et quatrième couches conductrices étant associées électriquement à la première couche conductrice, le capteur de proximité établissant un champ électrique (50) en réponse à un signal reçu d'un circuit d'entraînement (48).

2. Couvercle (20) pour un module de coussin d'air monté sur le volant (14) selon la revendication 1, dans lequel la troisième couche conductrice (32) sert de blindage pour isoler la quatrième couche conductrice (34) d'un potentiel électrique associé à la première couche conductrice (30).

3. Couvercle (20) pour un module de coussin d'air monté sur le volant (14) selon la revendication 1, dans lequel la quatrième couche conductrice (34) établit le champ électrique (50) et dirige le champ électrique (50) vers un objet (52) positionné en face du capteur de proximité (24).

4. Couvercle (20) pour un module de coussin d'air monté sur le volant (14) selon l'une quelconque des revendications précédentes, dans lequel la première couche conductrice (30) et la deuxième couche conductrice (28) sont entourées d'un matériau flexible (20) composant le couvercle (20) pour définir un interrupteur à membrane (26).

5. Couvercle (20) pour un module de coussin d'air monté sur le volant (14) selon l'une quelconque des revendications précédentes, englobant en outre une couture frangible (22) pouvant être séparée au cours du déploiement d'un coussin d'air (18).

6. Couvercle (20) pour un module de coussin d'air monté sur le volant (14) selon l'une quelconque des revendications précédentes, dans lequel une couche diélectrique (44) est agencée entre la première couche conductrice (30) et la troisième couche conductrice (32).

7. Couvercle (20) pour un module de coussin d'air monté sur le volant (14) selon l'une quelconque des revendications précédentes, dans lequel une couche diélectrique (46) est agencée entre la troisième couche conductrice (32) et la quatrième couche conductrice (34).

8. Couvercle (20) pour un module de coussin d'air monté sur le volant (14) selon l'une quelconque des revendications précédentes, dans lequel la première couche conductrice (30) englobe une première section et une deuxième section interconnectées par une section de pontage conductrice (56).

9. Couvercle (20) pour un module de coussin d'air monté sur le volant (14) selon l'une quelconque des revendications précédentes, dans lequel l'établissement d'un contact électrique entre les première et deuxième couches conductrices (30, 28) complète un circuit électrique destiné à l'actionnement d'un klaxon du véhicule (38).
